**Europäisches Patentamt**

**European Patent Office**

**Office européen des brevets**

(11) Veröffentlichungsnummer: **0 155 504 B1**

## (12) EUROPÄISCHE PATENTSCHRIFT

(45) Veröffentlichungstag der Patentschrift: **17.07.91**

(51) Int. Cl.5: **G01N 29/00**, G01N 29/10

(21) Anmeldenummer: **85101609.7**

(22) Anmeldetag: **14.02.85**

(54) **Verfahren zur Darstellung elastischer Parameter in Objektoroberflächen.**

(30) Priorität: **17.03.84 DE 3409929**

(43) Veröffentlichungstag der Anmeldung:
**25.09.85 Patentblatt 85/39**

(45) Bekanntmachung des Hinweises auf die
Patenterteilung:
**17.07.91 Patentblatt 91/29**

(84) Benannte Vertragsstaaten:
**CH DE FR GB LI NL**

(56) Entgegenhaltungen:
**EP-A- 0 053 034**
**DE-A- 3 241 814**

**JOURNAL OF APPLIED PHYSICS, Vol. 49, Nr. 10, Oktober 1978, New York, A. ATALAR: "An angular-spectrum approach to Contrast in reflection acoustic microscopy"**

(73) Patentinhaber: **Leica Industrieverwaltung GmbH**
**Ernst-Leitz-Strasse 30 Postfach 20 20**
**W-6330 Wetzlar 1(DE)**

(72) Erfinder: **Atalar, Abdullah, Dr. Ing.**
**Bahcelievler 5. Sok. 47/4**
**Ankara(TR)**

## Beschreibung

Die Erfindung betrifft ein Verfahren zur Darstellung elastischer Parameter in Objektflächen durch Abtastung der Objektfläche mit einem fokussierten akustischen Strahlenbündel und Nachweis der Interferenzen zwischen den an der Objektoberfläche spiegelnd reflektierten Ultraschallstrahlen und den nach Anregung von Oberflächenwellen aus der Objektfläche austretenden Ultraschallstrahlen.

Die Abtastung einer Objektfläche mit einem fokussierten akustischen Strahlenbündel kann mit einem in Reflektion arbeitenden akustischen Mikroskop durchgeführt werden. In der üblichen Betriebsweise wird eine akustische Linsenanordnung auf eine bestimmte Objektebene fokussiert und diese dann in einer rasterförmigen Bewegung senkrecht zur Ausbreitungsrichtung des akustischen Strahlenbündels abgetastet (x/y-Abtastung). Das vom Objekt reflektierte Signal wird von dem eingestrahlten Signal getrennt und zur Bilddarstellung verwendet.

Eine weitere bekannte Betriebsweise besteht darin, das Objekt an einer bestimmten Stelle nur in Richtung der akustischen Strahlausbreitung abzutasten (z-Abtastung). Hierbei wird also der Ultraschallbrennpunkt kontinuierlich in die Tiefe des Objektes verlagert. Die hiermit gewonnenen sogen. V-(z)-Kurven kommen durch Interferenz eines spiegelnd reflektierten Ultraschallstrahles mit einem durch Anregung von Oberflächenwellen nach einem lateralen Versatz wieder in die akustische Linsenanordnung zurückkehrenden Ultraschallstrahl zustande. Die jeweilige Ausgangsspannung am akustischen Wandler entspricht der Integration des akustischen Interferenzfeldes über die Fläche des Wandlers. Es ist bekannt, daß Materialien mit unterschiedlichen elastischen Parametern eine V(z)-Abhängigkeit zeigen, die materialcharakteristisch ist. Die Kurven können daher zur Identifikation von homogenen Materialschichten verwendet werden.

Ein Vorteil der akustischen Reflektions-Mikroskopie besteht darin, daß auch unter der Objektoberfläche liegende Schichten abgebildet werden können, wenn das akustische Strahlenbündel auf eine solche Ebene fokussiert wird. Für eine Fokussierung auf die Objektoberfläche soll $z = o$ gelten und für Fokuslagen unterhalb der Objektoberfläche wird $z$ als negativ bezeichnet. Der Kontrast der akustischen Bilder wird bei unterschiedlichen negativen z-Werten wegen der oben beschriebenen Interferenzerscheinungen durch den jeweiligen lokalen V(z)-Wert bestimmt. Das bedeutet, daß in dem Kontrast des akustischen Bildes eine Information über elastische Parameter innerhalb der Objektoberfläche enthalten sein muß. Eine ausführliche Diskussion der Zusammenhänge zwischen V(z) und akustischem Bildkontrast ist in J.Appl. Phys.

49 (10), pp. 5130-5139 (1978) enthalten.

Die bei den bekannten V(z)-Messungen erhaltenen Kurvenformen hängen im wesentlichen von der Art der jeweils angeregten Oberflächenwelle ab. Beeinflußt wird diese Oberflächenwelle in ihrer Amplitude und Wellenlänge von den elastischen Materialeigenschaften an der beschallten Objektstelle. Der Betrag von $z$ beeinflußt die mögliche Ausdehnung der Oberflächenwelle. Auf diese Weise ergeben sich unterschiedliche Amplituden und Phasenlagen für die von den Oberflächenwellen erzeugten Ultraschallstrahlen, die von der akustischen Linsenanordnung aufgenommen werden und mit den an der Objektoberfläche spiegelnd reflektierten Strahlen interferieren. Die V(z)-Kurven weisen typische Interferenzmaxima und -minima auf.

Diese Beeinflussung der Abbildungsstrahlen durch Vorgänge, die in einer dünnen Oberflächenschicht des Objektes stattfinden, ist in mehr oder minder starkem Maße jeder akustischen Bilddarstellung überlagert und beeinflußt, wie bereits erwähnt, den Kontrast des aus einer bestimmten z-Ebene erhaltenen Bildes. Durch eine Bildaufnahme aus zwei Objektebenen und Differenzbildung werden die von z unabhängigen Bildsignale unterdrückt. Das akustische Bild zeigt dann die Kontraständerung zwischen den beiden ursprünglich aufgenommenen Bildern. Die somit sichtbar gemachte Kontraständerung ist ein direktes Abbild der Verteilung der elastischen Parameter in der Objektoberfläche.

Der Erfindung lag die Aufgabe zugrunde, ein Verfahren anzugeben, mit dem die im Bildkontrast enthaltene Information über die in der abgetasteten Objektoberfläche vorhandene Verteilung elastischer Parameter genauer und einfacher sichtbar gemacht werden kann.

Diese Aufgabe wird bei einem Verfahren der eingangs genannten Art erfindungsgemäß durch die in Anspruch 1 angegebenen kennzeichnenden Merkmale gelöst. Vorteilhafte Ausgestaltungen der Verfahren ergeben sich aus den Unteransprüchen 2 bis 7.

Eine genauere Untersuchung der die Interferenzmaxima und -minima in den V(z)-Kurven bestimmenden Parameter ergibt, daß diese auch von der Frequenz der zur Untersuchung benutzten akustischen Strahlen abhängen. Es ergibt sich insbesondere, daß der Kurvenverlauf von dem Produkt aus der Ultraschallfrequenz $f$ und dem relativen Abstand $z$ des Ultraschallfokus von der Objektoberfläche abhängt. Die Erfindung nutzt daher die weitere Erkenntnis aus, daß die Darstellung der elastischen Parameter auch bei konstantem $z$ erfolgen kann, wenn die Frequenz $f$ geändert wird. Eine Frequenzänderung anstelle einer Positionsänderung ist wesentlich einfacher und schneller durchzuführen. Sie hat außerdem den Vorteil, daß bei der Differenzbildung die zu unterdrückenden Bildanteile aus derselben Objektebene stammen. Auch der Ausdehnungsbereich der Oberflächenwelle ist bei den beiden Messungen gleich, so daß die dargestellte Kontraständerung eine noch engere Beziehung zu den lokal vorliegenden elastischen Materialeigenschaften der Objektoberfläche hat.

Das Verfahren kann in der Weise ausgeführt werden, daß zunächst jeweils eine vollständige Objektabtastung mit Speicherung der gewonnenen Bilder erfolgt. Das erfordert jedoch einen relativ großen Aufwand für die Bereitstellung der notwendigen Speicherkapazität. Darüber hinaus werden an die Qualität der Bildaufnahme sehr hohe Anforderungen gestellt, da sich die bei der Bildaufnahme konstanten Parameter bei der zeitlich unterschiedlichen Abtastung nicht ändern dürfen. Es ist daher vorteilhaft, die Umschaltungen an jedem Abtastpunkt durchzuführen, bevor zum nächsten Abtastpunkt übergegangen wird.

Bei der Frequenzänderung entsteht ein zusätzliches Problem aus der Tatsache, daß die Gesamtverstärkung in dem zur Bildaufnahme verwendeten akustischen Mikroskop als Funktion der Ultraschallfrequenz variiert. Um eine vollständige Signalauslöschung bei den frequenzunabhängigen Teilen des Objektes zu erhalten, müssen die Amplituden der beiden Bilder jeweils geeignet gewichtet werden.

Das erfindungsgemäße Verfahren wird anhand der Zeichnung nachfolgend weiter erläutert. Insbesondere werden vorteilhafte Schaltungsanordnungen zur Durchführung des Verfahrens angegeben. Im einzelnen zeigen:

Fig. 1    eine akustomikroskopische Reflektionsanordnung mit schematischem Strahlengang,

Fig. 2    V(z)-Kurven schematisch für unterschiedliche Frequenzen,

Fig. 3    eine Schaltungsanordnung zur alternierenden Frequenzumschaltung,

Fig. 4    eine weitere Schaltungsanordnung zur alternierenden Frequenzumschaltung,

Fig. 5    eine Schaltungsanordnung zur Erzeugung der Amplitudendifferenz mit Gewichtung der Meßimpulse,

Fig. 6    eine weitere Schaltungsanordnung zur Differenzbildung.

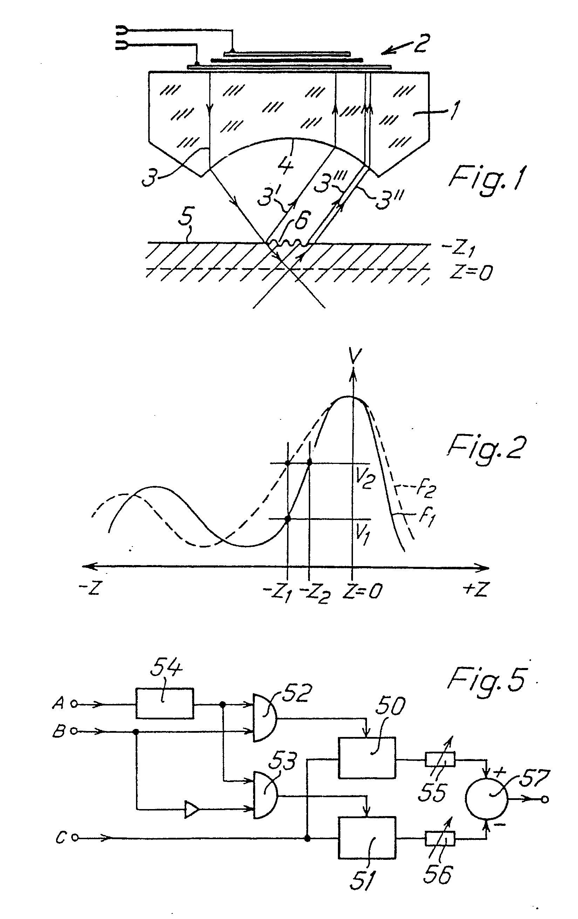

Fig. 1 zeigt in stark vereinfachter Darstellung eine akusto-mikroskopische Reflektionsanordnung. Sie besteht aus einer akustischen Linse 1 mit einem piezoelektrischen Übertrager 2. Dieser dient zunächst zur Erzeugung einer ebenen Ultraschallwellenfront, die durch den Strahl 3 angedeutet sein soll. Die sphärische Kalotte 4 in der akustischen Linse fokussiert das akustische Strahlenbündel auf das zu untersuchende Objekt 5. Der Zwischenraum zwischen der akustischen Linse 1 und dem Objekt 5 ist mit einem hier nicht dargestellten Immersionsmittel ausgefüllt.

Die Objektoberfläche soll bei $-z_1$ liegen und der Fokus der akustischen Linse 1 in der Ebene $z = 0$. Der auf die Objektoberfläche auftreffende Strahl 3 wird als Strahl 3' an der Fläche spiegelnd reflektiert. Ein Teil des Strahles 3 dringt in das Objekt ein und wird aus der Fokusebene heraus als Strahl 3'' in die akustische Linse zurückreflektiert. Ein weiterer Strahl 3''' wird durch die Oberflächenwelle 6 erzeugt. Alle drei auf die akustische Linse zulaufenden Strahlen entsprechen innerhalb des Linsenkörpers ebenen Schallwellen, die mit einem gegenseitigen Phasenversatz auf den Übertrager gelangen und miteinander interferieren. Der Übertrager integriert das akustische Feld und wandelt es in elektrische Signale um.

Der in Fig. 1 dargestellte Strahlengang soll schematisch die bei der Beschallung der Objektfläche auftretenden Vorgänge erläutern. Verwendet wurden nur solche Strahlen, die in den Aperturbereich der akustischen Linse fallen. Die mit der Erzeugung der Oberflächenwelle 6 zusammenhängenden Vorgänge sind im übrigen sehr komplex. Aus der Darstellung ist jedoch abzulesen, daß der Bereich, aus dem heraus Strahlen 3''' entstehen können, von der negativen z-Lage der Objektoberfläche abhängt. Die Strahlen 3'' werden sehr stark durch einen zwischen der Objektoberfläche und der Fokusebene liegenden Schichtaufbau beeinflußt. V(z)-Kurven reagieren daher auch sehr empfindlich auf Schichtendickenvariationen.

Es ist einzusehen, daß das mit Frequenzumschaltung arbeitende Verfahren durch den Schichtenaufbau unterhalb der Objektoberfläche kaum beeinflußt wird. Die Frequenzänderung wirkt sich zwar auf die Eindringtiefe des Strahls 3 und die Fokuslage aus. Die Veränderungen im Strahl 3'' sind jedoch wesentlich geringer als bei einer Positionsänderung. Beachtlich ist jedoch der Einfluß der Frequenzänderung auf die Eindringtiefe und Wellenlänge der Oberflächenwelle 6 und damit auf den Strahl 3'''. Aus diesem Grunde reagiert das erfindungsgemäß gebildete Differenzsignal nach Frequenzumschaltung auch auf kleinere Änderungen der elastischen Parameter in der Objektoberfläche. Dieses Verfahren ist daher empfindlicher.

Fig. 2 zeigt den typischen Verlauf einer V(z)-Kurve. Für positive z werden keinerlei Interferenzmaxima und -minima beobachtet. Diese erscheinen nur für negative z-Werte. Die ausgezogene Kurve soll für eine Frequenz $f_1$ gelten und die gestrichelte für eine Frequenz $f_2$. Das Diagramm verdeutlicht noch einmal die Abhängigkeit einzelner Signalwerte V von einer Positionsänderung bzw. von einer Frequenzänderung.

Wenn eine Objektoberfläche im Abstand $-z_1$ zur Fokusebene angeordnet ist und eine Frequenz $f_1$ angewendet wird, dann wird ein Wert $V_1$ gemes-

sen. Wenn dann die Frequenz in derselben Objektlage in $f_2$ geändert wird, dann wird sich der gemessene Wert in $V_2$ ändern. Derselbe Wert $V_2$ ergibt sich bei Anwendung der Frequenz $f_1$ in der Objektlage $-z_2$. Man kann die Signaländerung also auch so betrachten, als wäre die Frequenz $f_1$ beibehalten, das Objekt dagegen in die Stellung $-z_2$ bewegt worden. Erfindungsgemäß wird die Differenz $V_2-V_1$ gebildet und zur bildlichen Darstellung verwendet. Die kontrastreichste Darstellung der elastischen Parameter wird also aus solchen z-Einstellungen gewonnen, in denen die V(z)-Kurven die größte Steigung haben.

Das Verfahren der Frequenzumschaltung kann auch in der Objektlage $z = o$ durchgeführt werden. In diesem Fall zeigt das Differenzbild ausschließlich die frequenzabhängigen Teile des Objektes. Hier wird die frequenzabhängige Eindringtiefe der Oberflächenwelle bedeutsam. Das resultierende Bild ist daher sehr empfindlich von einem Schichtendickenaufbau abhängig, der in der Größenordnung der Eindringtiefe der Oberflächenwelle liegt.

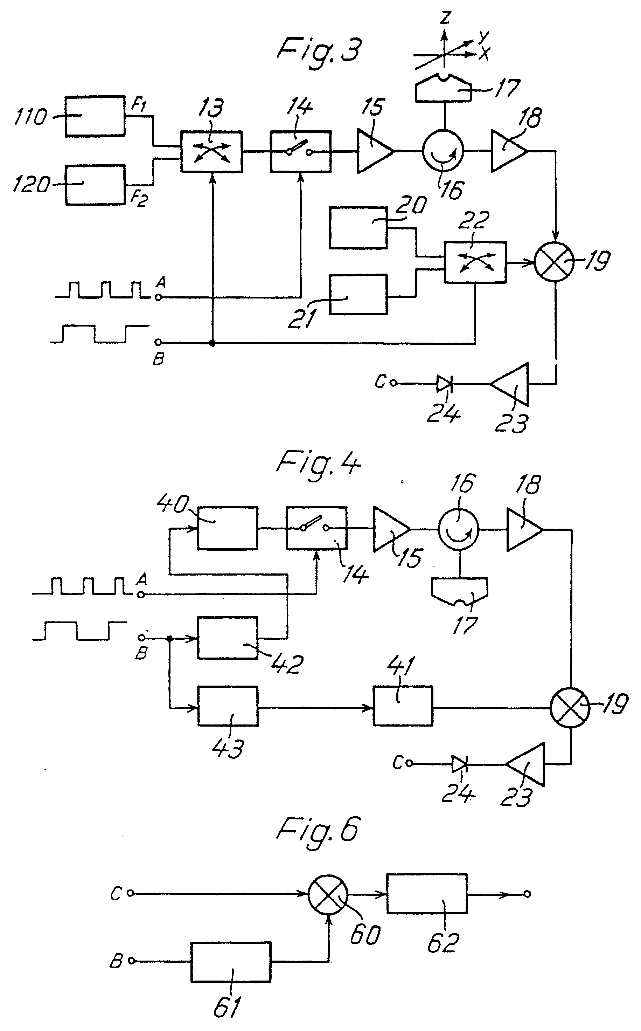

Die in Fig. 3 dargestellte Schaltungsanordnung ermöglicht eine alternierende Umschaltung der Arbeitsfrequenzen $f_1$ und $f_2$. Sie besteht aus zwei Übertrager-Oszillatoren 11 und 12 zur Erzeugung von Hochfrequenzschwingungen mit den Frequenzen $f_1$ und $f_2$. Ein nachgeschalteter Zwei-Wege-Pin-Schalter 13 schaltet diese Schwingungen abwechselnd auf die nachfolgende Leitung. Der Pin-Schalter 13 wird durch Rechteckimpulse, die über einen Eingang B in die Schaltungsanordnung eingegeben werden, gesteuert. Ein weiterer Pin-Schalter 14 erzeugt aus den Schwingungszügen kurze Impulse mit den Frequenzen $f_1$, $f_2$. Der Schalter 14 wird durch Rechteckimpulse gesteuert, die über einen Eingang A in die Schaltung eingegeben werden. Die Schaltsignale A sind um einen geringen Betrag gegenüber den Schaltflanken der Signale B zeitlich verschoben. Die Wiederholfrequenz der Schaltsignale A beträgt in der Praxis etwa 500 KHz.

Die $f_1$- und -$f_2$-Impulse werden in einem Leistungsverstärker 15 verstärkt und über einen Zirkulator 16 nacheinander an den nicht dargestellten piezoelektrischen Übertrager einer akustischen Linse 17 geleitet. Die Eingangsleitung wird danach durch den Zirkulator 16 gesperrt, so daß die von der akustischen Linse 17 aufgenommenen $f_1$- und $f_2$-Meßsignale ungestört in den Empfängerteil der Schaltungsanordnung geleitet werden können.

Der Empfängerteil enthält einen Vorverstärker 18 und eine nachfolgende Superheterodyn-Schaltung. Diese besteht aus einem Mischglied 19, zwei Lokal-Oszillatoren 20, 21, einem Zwei-Wege-Pin-Schalter 22 und einem Zwischenfrequenz-Verstärker 23. In einer Superheterodyn. Schaltung muß die Frequenz des Lokal-Oszillators so abgestimmt werden, daß die Differenzfrequenz zwischen der Lokal-Oszillatorfrequenz und der Übertrager-Oszillatorfrequenz gleich der Zwischenfrequenz $f_M$ des Zwischenfrequenz-Verstärkers 23 ist. Das wird in dem vorgeschlagenen System dadurch erreicht, daß zwei Lokal-Oszillatoren 20, 21 mit den Frequenzen $f_1 \pm f_M$ und $f_2 \pm f_M$ eingefügt sind, die über den Pin-Schalter 22 mit derselben alternierenden Schaltsequenz B am Mischglied 19 wirksam werden, wie die Übertrager-Oszillatoren 11, 12. Auf diese Weise liegt am Eingang des Zwischenfrequenzverstärkers 23 immer die gleiche Frequenz. Der Signalausgang C ist mit einer Hochfrequenzdiode 24 zur Erzeugung eines Videosignals abgeschlossen.

Am Signalausgang C des Zwischenfrequenz-Verstärkers 23 erscheinen Impulse, deren Amplitude das akusto-mikroskopische Meßsignal für zwei verschiedene Frequenzen in alternierender Reihenfolge darstellt. Da eine relativ hohe Wiederholfrequenz der Impulse vorliegt und eine relativ langsame mechanische Abtastung (x/y-Scan) benutzt wird, können die aufeinanderfolgenden Impulse so betrachtet werden, als würden sie vom selben Objektpunkt ausgehen.

In der in Fig. 4 dargestellten Schaltungsanordnung sind die beiden Übertrager-Oszillatoren und die beiden Lokal-Oszillatoren jeweils durch einen spannungsgeregelten Oszillator (VCO) 40, 41 ersetzt. Die Eingangssignale zur Frequenzregelung der Oszillatoren 40, 41 werden aus dem Frequenzumschaltsignal B abgeleitet. Durch zwischengeschaltete Verstärker 42, 43 werden der Gleichspannungspegel und die Amplitude der Rechteckwellen so abgestimmt, daß die Differenzfrequenz der beiden Oszillatoren gleich der Zwischenfrequenz $f_M$ des Zwischenfrequenz-Verstärkers 23 ist.

Zur Erzeugung der Amplitudendifferenz der aufeinanderfolgenden $f_1$- und $f_2$-Meßsignalimpulse kann z.B. eine der in den Fig. 5 und 6 dargestellten Schaltungsanordnungen verwendet werden.

In Fig. 5 sind in die das Meßsignal führende Leitung C zwei Sample & Hold-Bausteine 50, 51 so eingefügt, daß einer nur die $f_1$-Meßimpulse und der andere nur die $f_2$-Meßimpulse sammelt. Die S&H-Bausteine 50, 51 werden dazu durch zwei UND-Gatter 52, 53 in Abhängigkeit von den Schaltsignalen A und B geöffnet. Das Signal A kann dabei in einer Verzögerungseinheit 54 noch um die Laufzeit zwischen dem Anregungssignal an der akustischen Linse 17 und dem Empfang des Meßsignals verzögert werden.

Die am Ausgang der S&H-Bausteine 50, 51 entstehenden analogen Meßsignale können mit Hilfe von einstellbaren Potentiometern 55, 56 gewichtet werden Diese Gewichtung kann so abgestimmt werden, daß die nachfolgende Subtraktion in dem Differenzbildner 57 für alle frequenzunabhängigen Teile des Objektes Null ergibt. Die erforderliche Gewichtung kann durch Beobachtung einer Linienabtastung (x-Scan) manuell eingestellt werden.

Bei der in Fig. 6 dargestellten Schaltungsanordnung werden die $f_1$- und $f_2$-Meßimpulse in einen Vier-Quadranten-Analog-Multiplizierer 60 eingegeben. Der Multiplizierer wird durch das Frequenzumschaltsignal B gesteuert, dessen Gleichspannungspegel in einem Schaltungselement 61 angehoben wird, um positive und negative Amplituden der Rechteckwelle einstellen zu können. In dem Multiplizierer 60 werden die $f_1$-Meßimpulse mit dem positiven Amplitudenwert des Signals B und die $f_2$-Meßimpulse mit dem negativen Amplitudenwert des Signals B multipliziert. Durch Verschiebung des Gleichspannungspegels können die Meßimpulse also unterschiedlich gewichtet werden.

Am Ausgang des Multiplizierers 60 entsteht eine Impulsfolge aus abwechselnd positiven und negativen Meßwerten, die nachfolgend ein Tiefpaßfilter 62 durchläuft. Dieses hat im Ergebnis dieselbe Wirkung wie ein Differenzbildner.

Die analogen Differenzbilder-Schaltungen nach den Fig. 5 und 6 können selbstverständlich auch für eine Meßsignalfolge eingesetzt werden, die bei alternierender z-Positionseinstellung am Signaleingang C entsteht. Das Steuersignal B definiert dabei die jeweilige Fokuslage der akustischen Linse 17, die zweckmäßigerweise durch geeignete z-Verstellung des Objekttisches erzeugt wird, wenn die Linse die x/y-Abtastbewegung ausführt. Geeignet ist z.B. eine piezo-elektrische Objekttisch-Verstellung in z-Richtung.

Für manche Anwendungsfälle kann es auch zweckmäßig sein, die Meßsignale jeweils in Digitalwerte umzuwandeln und die Differenzbildung und evtl. Gewichtung der Signale in einem Rechner durchzuführen. Das wird insbesondere dann vorteilhaft sein, wenn sich an die Objektabtastung aus einer Ebene bzw. bei einer Frequenz noch eine automatische Bildanalyse anschließen soll.

## Patentansprüche

1. Verfahren zur Darstellung elastischer Parameter in Objektflächen durch Abtastung der Objektfläche mit einem fokussierten akustischen Strahlenbündel und Nachweis der Interferenzen zwischen den an der Objektoberfläche spiegelnd reflektierten Ultraschallstrahlen und den nach Anregung von Oberflächenwellen aus der Objektfläche austretenden Ultraschallstrahlen, **dadurch gekennzeichnet,** daß eine aufeinanderfolgende Abtastung mit akustischen Strahlenbündeln unterschiedlicher Frequenz durchgeführt, aus den gleichen Rasterpunkten zugeordneten Reflektionssignalen ein Differenzsignal gebildet und dieses zur Darstellung verwendet wird und daß der Fokus des akustischen Strahlenbündels so gewählt wird, daß er auf der Objektoberfläche oder im Objekt liegt und daß eine Oberflächenwelle erzeugt wird, deren Eindringtiefe stark frequenzabhängig ist.

2. Verfahren nach Anspruch 1, **dadurch gekennzeichnet,** daß eine Fokuslage relativ zur Objektoberfläche gewählt wird, in der sich in zumindest einem Rasterpunkt ein möglichst großes Differenzsignal beim Übergang von einer Ultraschallfrequenz zur anderen ergibt.

3. Verfahren nach einem der vorhergehenden Ansprüche, **dadurch gekennzeichnet,** daß die Umschaltung auf eine andere Frequenz jeweils nach einer vollständigen Abtastung der Objektfläche durchgeführt wird.

4. Verfahren nach einem der vorhergehenden Ansprüche, **dadurch gekennzeichnet,** daß die gesamten, einer Frequenz zugeordneten Reflektionssignale zunächst gespeichert und danach das Differenzsignal bei den Rasterpunkten gebildet und zur Anzeige gebracht wird.

5. Verfahren nach einem der vorhergehenden Ansprüche, **dadurch gekennzeichnet,** daß einer der Signalsätze vor der Differenzbildung mit einem Gewichtungsfaktor multipliziert wird.

6. Verfahren nach einem der vorhergehenden Ansprüche, **dadurch gekennzeichnet,** daß die Umschaltung auf eine andere Frequenz jeweils rasterpunktweise durchgeführt wird.

7. Verfahren nach einem der vorhergehenden Ansprüche, **dadurch gekennzeichnet,** daß die während der Abtastung alternierend entstehenden analogen Meßsignale direkt einem Differenzbildner zugeführt werden.

## Claims

1. Method for the representation of elastic parameters in object surfaces through scanning of the object surface by a focussed acoustic beam bundle and proof of the interference between the ultrasonic beams reflected at the object surface and the ultrasonic beams issuing from the object surface after excitation of surface waves, characterised thereby, that a successive scanning is performed with acoustic beam bundles of different frequency, a difference signal is formed from reflection signals associated with the same raster points and this is used for representation and that the focus of the acoustic beam bundle is so chosen that it lies on the object surface or in the object and that a surface wave is produced, the depth of penetration of which is highly dependent on frequency.

2. Method according to claim 1, characterised thereby, that a focus position is chosen relative to the object surface, in which a greatest possible difference signal results in at least one raster point on the transition from one ultrasonic frequency to the other.

3. Method according to one of the preceding claims, characterised thereby, that the switching-over to another frequency takes place each time after a complete scanning of the object area.

4. Method according to one of the preceding claims, characterised thereby, that the entire reflection signals, which are associated with one frequency, are first stored and the difference signal is formed thereafter at the raster points and brought to indication.

5. Method according to one of the preceding claims, characterised thereby, that one of the signal sets is multiplied by a weighting factor before the difference formation.

6. Method according to one of the preceding claims, characterised thereby, that the switching-over to another frequency is performed each time raster point by raster point.

7. Method according to one of the preceding claims, characterised thereby, that the analog measurement signals, which arise in alternation during the scanning, are fed directly to a difference former.

**Revendications**

1. Procédé pour la représentation de paramètres élastiques dans des surfaces d'objet par exploration de la surface d'objet avec un faisceau de rayons acoustiques focalisés et détection des interférences entre les rayons ultrasonores spéculairement réfléchis à la surface d'objet et les rayons ultrasonores sortant de la sur face d'objet après excitation d'ondes de surface, caractérisé en ce qu'un balayage successif est exécuté avec des faisceaux de rayons de fréquence différente, un signal de différence est formé à partir de signaux de réflexion associés aux mêmes points de réseau et ce signal est utilisé pour la représentation et en ce que le foyer du faisceau de rayons acoustiques est choisi de telle façon qu'il soit situé à la surface de l'objet ou dans l'objet et en ce qu'une onde de surface est produite, dont la profondeur de pénétration est fortement dépendante de la fréquence.

2. Procédé selon la revendication 1 , caractérisé en ce qu'une position de foyer est choisie relativement à la surface d'objet, dans laquelle se produit, en au moins un point de réseau, un signal de différence le plus grand possible lors du passage d'une fréquence d'ultrason à une autre.

3. Procédé selon l'une des revendications précédentes, caractérisé en ce que la commutation sur une autre fréquence est exécutée chaque fois après une exploration complète de la surface d'objet.

4. Procédé selon l'une des revendications précédentes, caractérisé en ce que tous les signaux de réflexion, associés à une fréquence, sont d'abord mis en mémoire et, ensuite, le signal de différence aux points de réseau est formé et amené à l'affichage.

5. Procédé selon l'une des revendications précédentes, caractérisé en ce que l'un des groupes de signaux est multiplié par un facteur de pondération avant la formation de différence.

6. Procédé selon l'une des revendications précédentes, caractérisé en ce que la commutation sur une autre fréquence est exécutée respectivement point par point de la trame.

7. Procédé selon l'une des revendications précédentes, caractérisé en ce que les signaux de mesure analogiques, produits de façon alternée pendant le balayage, sont amenés directement à un organe de formation de différence.

Fig.1

Fig.2

Fig.5

Fig. 3

Fig. 4

Fig. 6

8